(19) **Europäisches Patentamt / European Patent Office / Office européen des brevets**

(11) **EP 3 900 817 A1**

(12) # EUROPÄISCHE PATENTANMELDUNG

(43) Veröffentlichungstag:
    **27.10.2021  Patentblatt 2021/43**

(51) Int Cl.:
    ***B01J 8/00*** (2006.01)    ***B01J 8/06*** (2006.01)
    ***B01J 19/08*** (2006.01)

(21) Anmeldenummer: **20171182.7**

(22) Anmeldetag: **23.04.2020**

(84) Benannte Vertragsstaaten:
    **AL AT BE BG CH CY CZ DE DK EE ES FI FR GB GR HR HU IE IS IT LI LT LU LV MC MK MT NL NO PL PT RO RS SE SI SK SM TR**
    Benannte Erstreckungsstaaten:
    **BA ME**
    Benannte Validierungsstaaten:
    **KH MA MD TN**

(71) Anmelder:
    • **Linde GmbH**
      **82049 Pullach (DE)**
    • **BASF SE**
      **67056 Ludwigshafen am Rhein (DE)**

(72) Erfinder:
    • **Hofstätter, Martin**
      **81369 München (DE)**
    • **Zellhuber, Mathieu**
      **82152 Martinsried (DE)**
    • **Reiser, Peter**
      **82541 Münsing (DE)**
    • **Kiese, Georg**
      **85604 Zorneding (DE)**
    • **Ziegler, Christian**
      **80636 München (DE)**
    • **Stegemann, Robert**
      **81543 München (DE)**
    • **Aengenheister, Jens**
      **80331 München (DE)**
    • **Feigl, Jürgen**
      **80331 München (DE)**
    • **Wellenhofer, Anton**
      **82069 Hohenschäftlarn (DE)**
    • **Delhomme-Neudecker, Clara**
      **81825 München (DE)**
    • **Shustov, Andrey**
      **67059 Ludwigshafen am Rhein (DE)**
    • **Jenne, Eric**
      **67454 Hassloch (DE)**
    • **Kochendörfer, Kiara Aenne**
      **68159 Mannheim (DE)**
    • **Laib, Heinrich**
      **67117 Limburgerhof (DE)**
    • **Kühn, Heinz-Jürgen**
      **67593 Westhofen (DE)**
    • **Jacob, Reiner**
      **67691 Hochspeyer (DE)**

(74) Vertreter: **DehnsGermany Partnerschaft von Patentanwälten**
    **Postfach 33 04 29**
    **80064 München (DE)**

(54) ## REAKTOR UND VERFAHREN ZUR DURCHFÜHRUNG EINER CHEMISCHEN REAKTION

(57)    Die vorliegende Erfindung betrifft einen Reaktor (100, 200) zur Durchführung einer chemischen Reaktion, der einen Reaktorbehälter (10) und ein oder mehrere Reaktionsrohre (20) aufweist, wobei in den Reaktorbehälter (10) zur elektrischen Beheizung des einen oder der mehreren Reaktionsrohre (20) ein oder mehrere Stromeinspeiseelemente (41) geführt ist oder sind, wobei das eine oder mehreren Stromeinspeiseelemente (41) einen oder jeweils einen stabförmigen Abschnitt (43) aufweist oder aufweisen und der oder die stabförmigen Abschnitte (43) an einem oder jeweils einem Wanddurchtritt (15) durch eine Wand (14) des Reaktorbehälters (10) verläuft oder verlaufen. Es ist vorgesehen, dass außerhalb des Reaktorbehälters (10) und anschließend an die Wand (14), des Reaktorbehälters (10) durch die die stabförmigen Abschnitte (43) an ihren Wanddurchtritten (15) verlaufen, eine Anschlusskammer (60) angeordnet ist, in die die stabförmigen Abschnitte (43) hineinragen. Es sind Gaseinspeisemittel (80-82) bereitgestellt, die dafür eingerichtet sind, die Anschlusskammer (60) mit einem Inertisierungsgas zu beaufschlagen, und die Wanddurchtritte (15) mit den darin längsbeweglich aufgenommenen stabförmigen Abschnitten (43) sind gasdurchlässig ausgebildet, so dass zumindest ein Teil des in die Anschlusskammer (60) eingespeisten Inertisierungsgases in den Reaktorbehälter (10) abströmt. Ein entsprechendes Verfahren ist ebenfalls Gegenstand der vorliegenden Erfindung.

EP 3 900 817 A1

**Fig. 2**

## Beschreibung

Die Erfindung betrifft einen Reaktor und ein Verfahren zur Durchführung einer chemischen Reaktion gemäß den Oberbegriffen der unabhängigen Patentansprüche.

Stand der Technik

In einer Reihe von Verfahren in der chemischen Industrie werden Reaktoren eingesetzt, in denen ein oder mehrere Reaktanden durch beheizte Reaktionsrohre geführt und dort katalytisch oder nichtkatalytisch umgesetzt werden. Die Beheizung dient dabei insbesondere dazu, die benötigte Aktivierungsenergie für die ablaufende chemische Reaktion zu überwinden. Die Reaktion kann insgesamt endotherm oder, nach Überwindung der Aktivierungsenergie, exotherm ablaufen. Die vorliegende Erfindung betrifft insbesondere stark endotherme Reaktionen.

Beispiele für solche Verfahren sind das Steamcracken (Dampfspalten), unterschiedliche Reformierungsverfahren, insbesondere die Dampfreformierung, die Trockenreformierung (Kohlendioxidreformierung), gemischte Reformierungsverfahren, Verfahren zur Dehydrierung von Alkanen und dergleichen. Beim Steamcracken werden die Reaktionsrohre dabei in Form von Rohrschlangen (engl. Coils), die im Reaktor zumindest einen Umkehrbogen aufweisen, durch den Reaktor geführt, wohingegen bei der Dampfreformierung typischerweise ohne Umkehrbogen durch den Reaktor verlaufende Rohre verwendet werden.

Die Erfindung eignet sich für alle derartigen Verfahren und Ausgestaltungen von Reaktionsohren. Rein illustrativ wird hier auf die Artikel "Ethylene", "Gas Production" und "Propene" in Ullmann's Encyclopedia of Industrial Chemistry, beispielsweise die Publikationen vom 15 April 2009, DOI: 10.1002/14356007.a10_045.pub2, vom 15. Dezember 2006, DOI: 10.1002/14356007.a12_169.pub2, und vom 15. Juni 2000, DOI: 10.1002/14356007.a22_211, verwiesen.

Die Reaktionsrohre von entsprechenden Reaktoren werden herkömmlicherweise durch Verwendung von Brennern beheizt. Die Reaktionsrohre werden dabei durch eine Brennkammer geführt, in der auch die Brenner angeordnet sind.

Wie beispielsweise in der DE 10 2015 004 121 A1 (zugleich EP 3 075 704 A1) beschrieben, steigt gegenwärtig jedoch beispielsweise die Nachfrage nach Synthesegas und Wasserstoff, die ohne oder mit reduzierten lokalen Kohlendioxidemissionen hergestellt werden. Diese Nachfrage kann aber durch Verfahren, in denen befeuerte Reaktoren eingesetzt werden, aufgrund der Verfeuerung typischerweise fossiler Energieträger nicht bedient werden. Andere Verfahren scheiden beispielsweise aufgrund hoher Kosten aus. Entsprechendes gilt auch für die Bereitstellung von Olefinen und/oder anderer Kohlenwasserstoffe durch Steamcracken oder Dehydrierung von Alkanen. Auch in solchen Fällen besteht der Wunsch nach Verfahren, die zumindest vor Ort geringere Mengen an Kohlendioxid emittieren.

Vor diesem Hintergrund wird in der erwähnten DE 10 2015 004 121 A1 eine elektrische Beheizung eines Reaktors zur Dampfreformierung zusätzlich zu einer Befeuerung vorgeschlagen. Hierbei werden eine oder mehrere Spannungsquellen verwendet, die eine Dreiphasenwechselspannung an drei Außenleitern bereitstellt oder bereitstellen. Jeder Außenleiter wird an einem Reaktionsrohr angeschlossen. Es wird eine Sternschaltung gebildet, bei der ein Sternpunkt durch einen Sammler realisiert wird, in den die Rohrleitungen einmünden, und mit dem die Reaktionsrohre leitend verbunden sind. Auf diese Weise bleibt der Sammler idealerweise potentialfrei. Der Sammler ist bezogen auf die Vertikale unterhalb sowie außerhalb der Brennkammer angeordnet und erstreckt sich bevorzugt quer zu den Reaktorrohren bzw. entlang der Horizontalen. Die WO 2015/197181 A1 offenbart ebenfalls einen Reaktor, dessen Reaktionsrohre in Sternpunktschaltung angeordnet sind.

Neben der direkten Beheizung von Reaktionsrohren, bei der ein Strom durch die Reaktionsrohre fließt, existieren auch unterschiedlichste Konzepte für die indirekte elektrische Beheizung von Reaktionsrohren. Die indirekte elektrische Beheizung kann, wie unter anderem in der WO 2020/002326 A1 beschrieben, in Form einer externen elektrischen Beheizung erfolgen. Auch eine interne Beheizung ist möglich, wie beispielsweise in der WO 2019/228798 A1 offenbart. Neben einer Widerstands- bzw. Impedanzheizung kann eine induktive elektrische Beheizung des von Reaktionsrohren oder einer Katalysatorschüttung, wie beispielsweise in der WO 2017/072057 A1 beschrieben, erfolgen. Die induktive Beheizung kann beispielsweise ein internes oder externes Heizelement oder die Reaktionsrohre selbst erwärmen. Eine direkte (nicht induktive) Beheizung eines Reaktionsrohrs ist auch in der DE 10 2015 004 121 A1 offenbart. Zur Beheizung sind grundsätzliche Konzepte mit mehrphasigem oder einphasigem Wechselstrom oder mit Gleichstrom realisierbar. Bei der direkten Beheizung von Reaktoren mittels Gleichstroms oder auch mit einphasigem Wechselstrom kann keine Sternschaltung mit einem potentialfreien Sternpunkt realisiert werden, die Stromeinspeisung ist jedoch grundsätzlich in ähnlicher Weise realisierbar. Die vorliegende Erfindung eignet sich für alle Varianten der elektrischen Beheizung.

Wie auch nachfolgend erläutert, sind bei elektrisch beheizten Reaktoren besondere sicherheitsrelevante Aspekte zu beachten. Die vorliegende Erfindung stellt sich die Aufgabe, Maßnahmen anzugeben, die diese Aspekte berücksichtigen und auf diese Weise einen vorteilhaften Betrieb eines elektrisch beheizten Reaktors erlauben.

Offenbarung der Erfindung

Vor diesem Hintergrund schlägt die vorliegende Erfindung einen Reaktor und ein Verfahren zur Durchführung einer chemischen Reaktion gemäß den Oberbegriffen der unabhängigen Patentansprüche vor. Ausgestaltungen sind jeweils Gegenstand der abhängigen Patentansprüche sowie der nachfolgenden Beschreibung.

In dem elektrifizierten Ofenkonzept (der Begriff "Ofen" wird üblicherweise zur Bezeichnung eines entsprechenden Reaktors bzw. zumindest von dessen thermisch isoliertem Reaktionsraum verstanden), das der vorliegenden Erfindung zugrunde liegt, werden beispielsweise Reaktionsrohre bzw. entsprechende Rohrstrecken hiervon (nachfolgend auch kurz als "Rohre" bezeichnet) selbst als elektrische Widerstände benutzt, um Wärme zu erzeugen. Dieser Ansatz hat den Vorteil eines höheren Wirkungsgrads im Vergleich zu einer indirekten Erwärmung durch externe elektrische Heizkörper sowie einer höheren erreichbaren Wärmestromdichte. Es ist aber, wie eingangs erwähnt, auch möglich, im Rahmen der vorliegenden Erfindung irgendeine andere Art der elektrischen Beheizung (direkt oder indirekt, in Form einer Widerstands-, Impedanz- oder Induktionsheizung, mittels ein- oder mehrphasigen Wechselstroms oder mit Gleichstrom) durchzuführen, wenn sich diese als vorteilhaft herausstellt.

Die Stromeinspeisung erfolgt im Falle der Beheizung mit mehrphasigem Wechselstrom in die direkt beheizten Reaktionsrohre über M separat angeschlossene Phasen. Die stromleitenden Reaktionsrohre, die mit den M Phasen verbunden sind, können an einen Sternpunkt ebenfalls elektrisch verbunden werden. Die Phasenzahl M beträgt insbesondere 3, entsprechend der Phasenzahl üblicher Drehstromquellen bzw. -netze. Grundsätzlich ist die vorliegende Erfindung aber nicht auf die Verwendung von drei Phasen beschränkt, sondern kann auch mit einer größeren Phasenzahl, beispielsweise einer Phasenzahl von 4, 5, 6, 7 oder 8, verwendet werden. Ein Phasenversatz beträgt dabei insbesondere 360°/M, d.h. bei einem dreiphasigen Drehstrom 120°.

Durch die Sternschaltung am Sternpunkt wird in einer elektrischen Beheizung mit mehrphasigem Wechselstrom ein Potentialausgleich zwischen den Phasen erreicht, was eine elektrische Isolierung der angeschlossenen Rohrleitungen überflüssig macht. Dies stellt einen besonderen Vorteil eines derartigen Ofenkonzepts dar, da eine Unterbrechung der metallischen Reaktionsrohre zur Isolierung bestimmter Abschnitte insbesondere aufgrund der verwendeten hohen Temperaturen und des damit erforderlichen hohen Material- und Konstruktionsaufwands unerwünscht ist.

Die nachfolgend erläuterten, erfindungsgemäß vorgeschlagenen Maßnahmen eignen sich jedoch in gleicher Weise für die Verwendung von einphasigem Wechselstrom und Gleichstrom und die vorliegende Erfindung kann sowohl in wechselstrom- als auch in gleichstrombeheizten Reaktoren oder auch in entsprechenden Mischformen zum Einsatz kommen. Wie erwähnt, eignet sich die vorliegende Erfindung auch zum Einsatz bei indirekt beheizten Reaktionsrohren. Bei einer Gleichstromanordnung ist beispielsweise gegenüber einer Wechselstromanordnung lediglich die Art der Stromquelle und der der Stromeinspeisung entgegengesetzte Bereich der Reaktionsrohre oder entsprechender strombeaufschlagter Abschnitte unterschiedlich. In letzterem wird eine elektrische Verbindung unterschiedlicher Rohrstrecken nur optional durchgeführt. Da in einer Gleichstromanordnung kein potentialfreier Sternpunkt vorliegt, sind geeignete Stromabfuhrelemente bereitzustellen, die den Stromfluss wieder sicher nach außen führen. Letztere können analog zu den nachfolgend noch beschriebenen Stromeinspeisungen ausgeführt werden.

Im Sprachgebrauch der Patentansprüche betrifft die vorliegende Erfindung dabei einen Reaktor zur Durchführung einer chemischen Reaktion, der einen Reaktorbehälter (d.h. einen thermisch isolierten oder zumindest teilweise isolierten Bereich) und ein oder mehrere Reaktionsrohre aufweist, wobei in den Reaktorbehälter zur elektrischen Beheizung des oder der Reaktionsrohre ein oder mehrere Stromeinspeiseelemente geführt ist oder sind. Erfindungsgemäß weist das Stromeinspeiseelement einen stabförmigen Abschnitt auf bzw. weisen mehrere Stromspeiseelemente jeweils einen stabförmigen Abschnitt auf, wobei der oder die stabförmigen Abschnitte an einem Wanddurchtritt bzw. jeweils an einem Wanddurchtritt durch eine Wand des Reaktorbehälters verlaufen.

Im Rahmen der vorliegenden Erfindung ist außerhalb des Reaktorbehälters und anschließend an die Wand, durch welche der oder die stabförmigen Abschnitte des oder der Stromeinspeiseelemente verlaufen, also in welcher der oder die Wanddurchtritte ausgebildet ist oder sind, eine Anschlusskammer angeordnet, in die die stabförmigen Abschnitte ragen. Die stabförmigen Abschnitte (nachfolgend wird lediglich zur Vereinfachung, aber ohne hierdurch intendierte Einschränkung der Plural verwendet; die Erläuterungen gelten aber in gleicher Weise für einzeln vorhandene Elemente) sind in der Anschlusskammer insbesondere an flexible Kontaktelemente angebunden, beispielsweise an Litzen, Strombänder, Lamellenbänder oder Stromfedern, beispielsweise auch über geeignete Zwischenabschnitte bzw. -elemente. Diese flexiblen Kontaktelemente sind mit einem nicht an die stabförmigen Abschnitte angebundenen Ende mit typischerweise unbeweglich in der Anschlusskammer, beispielsweise isoliert in einer Wand, angeordneten starren Kontaktelementen, die beispielsweise von einem Gleich- oder Wechselstrom-Transformator versorgt werden, befestigt. Die flexiblen Kontaktelemente gleichen die Längsbewegung der stabförmigen Abschnitte in den Wanddurchtritten aus. Mit anderen Worten sind die stabförmigen Abschnitte in den Wanddurchtritten längsbeweglich aufgenommen.

Die Wanddurchtritte mit den darin längsbeweglich aufgenommenen stabförmigen Abschnitten sind dabei im Rahmen der Erfindung gasdurchlässig ausgebildet, d.h. es kann ein gewisser Übertritt von Gas aus dem Reaktorbehälter in die Anschlusskammer erfolgen und umgekehrt.

Erfindungsgemäß wird die Anschlusskammer durch entsprechend eingerichtete Gaseinspeisemittel, beispielsweise umfassend Einspeisedüsen oder -öffnungen, Leitungen und ein damit verbundenes Gasreservoir, mit einem Inertisierungsgas beaufschlagt, das zumindest zu einem Teil in die Anschluskammer eingespeist wird und durch die Wanddurchtritte in den Reaktorbehälter abströmt. Das Inertisierungsgas wird dabei zumindest zum Teil in die Anschlusskammer eingespeist. Die Einspeisung in die Anschlusskammer bewirkt die vorteilhaften Effekte, dass die Anschlusskammer mitgespült wird, ein zusätzlicher Kühleffekt in der Anschlusskammer erreicht wird, und eine möglichst gerichtete Spülströmung im Reaktorbehälter von unten nach oben erzielt wird. Oben oder seitlich in den Reaktorbehälter können an beliebiger Stelle weitere Einspeisestellen vorgesehen sein, z.B. um die Spülströmung im Reaktorbehälter weiter zu verbessern, insbesondere zur Vermeidung von Totzonen, in denen sich möglicherweise Sauerstoff anreichern kann.

Die Erfindung wird nachfolgend weiter unter Bezugnahme auf Ausgestaltungen beschrieben, in denen eine Anzahl von Rohrstrecken des einen oder der mehreren Reaktionsrohre jeweils zwischen einem ersten Bereich und einem zweiten Bereich innerhalb des Reaktorbehälters und durch einen Zwischenbereich zwischen dem ersten und dem zweiten Bereich verlaufen, und wobei die Rohrstrecken in dem ersten Bereich zur elektrischen Beheizung der Rohrstrecken jeweils elektrisch mit einem oder mehreren Stromanschlüssen einer Stromquelle, und zwar im Fall einer Gleichstromanordnung mit einem oder mehreren Gleichstromanschlüssen und im Fall einer Wechselstromanordnung mit den Phasenanschlüssen ("Außenleitern") einer mehrphasigen Wechselstromquelle verbunden oder verbindbar sind, wie im Einzelnen unten erläutert. Bei einer alternativ ebenfalls möglichen indirekten Beheizung, die wie erwähnt ebenfalls einsetzbar ist, werden Anschlusselemente für entsprechende Heizeinrichtungen durch die Wand des Reaktorbehälters geführt.

Wie erwähnt, wird dabei in einer entsprechenden Ausgestaltung der Erfindung mittels einer Wechselstromanordnung über die Phasenanschlüsse jeweils eine Wechselspannung bereitgestellt und die Wechselspannungen der Phasenanschlüsse sind in der oben erläuterten Weise phasenverschoben. Als Wechselstromquelle kann beispielsweise ein Versorgungsnetz oder ein geeigneter Generator und/oder Transformator dienen. Durch die Rohrstrecken wird eine Sternschaltung gebildet, in der diese an ihrem jeweils der Stromeinspeisung entgegengesetzten Ende, d.h. in dem zweiten Bereich, elektrisch leitend miteinander gekoppelt werden.

Im Fall einer Gleichstromanordnung werden dagegen in anderen Ausgestaltungen über einen oder mehrere Gleichstromanschlüsse dagegen gleiche oder unterschiedliche statische elektrische Potentiale eingespeist und es sind an dem jeweils der Stromeinspeisung entgegengesetzten Ende Stromentnahmeelemente bereitgestellt. Entsprechendes gilt in vergleichbarer Weise bei der Verwendung eines einphasigen Wechselstroms aus einer oder mehreren Stromquellen.

In dem Zwischenbereich verlaufen die Rohrstrecken in der erwähnten Ausgestaltung der vorliegenden Erfindung insbesondere frei, d.h. ohne eine mechanische Abstützung, ohne elektrische Kontaktierung und/oder ohne fluidische oder rein mechanische Querverbindungen miteinander durch den Reaktorbehälter. Sie verlaufen in dieser Ausgestaltung in dem Zwischenbereich insbesondere im Wesentlichen oder vollständig gerade, wobei unter "im Wesentlichen gerade" verstanden werden soll, dass eine Winkelabweichung von weniger als 10°oder 5°vorlie gt.

Insbesondere die Spaltreaktionen beim Steamcracken sind stark endotherme Reaktionen. Für die Bereitstellung der nötigen Energie für die Reaktion mittels direkter Beheizung (Ohmscher Widerstand) werden daher hohe Stromstärken benötigt, die in dem angesprochenen Reaktorkonzept von einem oder mehreren außerhalb des Reaktors platzierten Transformatoren bereitgestellt werden.

Der elektrische Strom muss bei allen vorstehend genannten Konzepten der elektrischen Beheizung mit möglichst geringen Verlusten (geringer elektrischer Widerstand) von außen in das Innere des thermisch isolierten Reaktors und zu den prozessführenden Bereichen geleitet werden.

Zur Reduzierung der thermischen Verluste und damit zum Erreichen eines hohen Systemwirkungsgrads ist es zwingend erforderlich, die elektrisch beheizten Reaktionsrohre in einer isolierten Box (hier als Reaktorbehälter bezeichnet) zu platzieren. Beim Durchdringen der thermisch isolierten Wand des Reaktorbehälters muss der Stromleiter dabei eine quasi-adiabate Zone überwinden, ohne dass in diesen Bereichen unerlaubt hohe lokale Temperaturen auftreten.

Daher werden im Rahmen der soeben erläuterten besonders bevorzugten Ausgestaltung der vorliegenden Erfindung in dem ersten Bereich des Reaktors, also im Bereich der Stromeinspeisung, Stromeinspeiseanordnungen bereitgestellt, an die jeweils eine Rohrstrecke oder jeweils eine Gruppe der Rohrstrecken elektrisch angebunden sind. Die Rohrstrecken sind in einer solchen Anzahl vorgesehen, dass jeweils eine oder jeweils eine Gruppe von mehreren Rohrstrecken mit jeweils einer der Stromeinspeiseanordnungen verbindbar ist und umgekehrt. Die Anzahl der im Rahmen der vorliegenden Erfindung bereitgestellten Stromeinspeiseanordnungen richtet sich dabei nach der Anzahl der Phasenanschlüsse der mehrphasigen Wechselstromquelle im Falle einer Wechselstromanordnung bzw. entspricht diese Anzahl der Anzahl der Gleichstromanschlüsse.

Die Stromeinspeiseelemente weisen jeweils zumindest einen der erwähnten stabförmigen Abschnitte auf, der jeweils an seinem Wanddurchtritt durch die Wand des Reaktorbehälters verläuft. Der stabförmige Abschnitt ist, beispielsweise im Gegensatz zu Litzen oder dergleichen, in allen Ausgestaltungen der vorliegenden Erfindung insbesondere einstückig (d.h. insbesondere nicht in Form paralleler oder verflochtener Drähte) ausgebildet. Er kann massiv oder zumindest teilweise rohrförmig, d.h. als Hohlstab, ausgebildet sein. Der stabförmige Abschnitt weist eine Längserstreckung senkrecht zu der Wand des Reaktorbehälters auf, die wenigstens doppelt so groß, insbesondere wenigstens dreifach, vierfach oder fünffach und beispielsweise bis zu zehnfach so groß ist wie eine größte Quererstreckung parallel zu der Wand des Reaktorbehälters. Der stabförmige Abschnitt kann im Querschnitt beispielsweise rund, oval oder drei- oder mehreckig ausgebildet sein oder eine beliebige andere Form aufweisen.

Bei dem Inertisierungsgas kann es sich in allen Ausgestaltungen der vorliegenden Erfindung um ein Gas oder ein Gasgemisch handeln, das Stickstoff, Kohlendioxid und/oder Argon in einem jeweils überatmosphärischen Gehalt aufweist, bzw. sind die Gaseinspeisemittel zur Bereitstellung eines entsprechenden Inertisierungsgases eingerichtet. Insbesondere kann der Gehalt bei mehr als 50%, 60%, 70%, 80% oder 90% liegen. Es muss sich also nicht um ein reines "Inertgas" im klassisch verstandenen Sinne handeln; vielmehr reicht aus, wenn das Inertisierungsgas, insbesondere durch seinen Gehalt an einem nicht brennbaren Gas, den zündfähigen Mischungsbereich zumindest teilweise verringert, also die Gefahr einer Entzündung, Explosion oder Detonation reduziert. Ein Inertisierungsgas zur Verwendung im Rahmen der vorliegenden Erfindung kann insbesondere einen unteratmosphärischen Sauerstoffgehalt, beispielsweise einen Sauerstoffgehalt von weniger als 10%, 5%, 1%, 0,5% oder 0,1% aufweisen. Ein Inertisierungsgas kann auch (im Wesentlichen) sauerstofffrei sein.

Die Erfindung ermöglicht mit der erfindungsgemäß vorgenommenen Einspeisung von Inertisierungsgas eine bewegliche Aufnahme der stabförmigen Abschnitte der Stromeinspeiseelemente in der Wand des Reaktorbehälters, ohne dass eine gasdichte Abdichtung erforderlich ist, wie sie ansonsten zur Vermeidung eines Austritts von brennbaren Gasen in die Umgebung, beispielsweise bei Beschädigung der Reaktionsrohre ("Coilreißer") erforderlich wäre. Die Wanddurchtritte können daher im Rahmen der vorliegenden Erfindung deutlich kompakter und durch den Verzicht auf Dichtmaterialien dauerhaft ausgeführt werden. Vorteilhaft ist hierbei, dass alle aus der Anschlusskammer zur Umgebung austretenden Bauteile nurmehr sehr geringe Ausgleichsbewegungen aufweisen, so dass die Umsetzung der Gasdichtigkeit hier gegenüber der Reaktorbehälterwand selbst deutlich vereinfacht ist.

Coilreißer sind in herkömmlichen, befeuerten Reaktoren ein geringeres sicherheitstechnisches Problem als in rein elektrisch beheizten Reaktoren, wie sie erfindungsgemäß eingesetzt werden, da in befeuerten Reaktoren aus den Reaktionsrohren austretende brennbare Gase in Form eines Kohlenwasserstoff-Dampf- Gemischs durch die im Reaktorbehälter bzw. einer entsprechenden Brennkammer stattfindende Verbrennung sofort und kontinuierlich umgesetzt werden bzw. da durch die stattfindende Verbrennung in anderen Bereichen des Reaktorbehälters ein deutlich reduzierter Sauerstoffgehalt vorliegt und damit der die Reaktionsrohre umgebende Gasraum bereits im Wesentlichen "inertisiert" ist. Dagegen könnten sich entsprechende brennbare Gase bei einer rein elektrischen Beheizung im Reaktorbehälter anreichern und dort bei dem normalen Sauerstoffgehalt der Luft und Temperaturen oberhalb der Selbstzündungstemperatur beispielsweise die Explosions- oder Detonationsgrenze erreichen. Auch bei einer Verbrennung ohne Detonation kommt es durch eine vollständige oder unvollständige Verbrennung zu einem Energieeintrag und damit ggf. zu einer Überhitzung. Die vollständige oder unvollständige Verbrennung kann außerdem zusammen mit dem aus den Reaktionsrohren ausströmenden Gasvolumen an sich zu einer deutlichen Druckerhöhung führen. Diese Drucksteigerung wird vermindert, weil durch die Verwendung eines Inertisierungsgases der Abbrand des austretenden Gasgemischs verhindert oder zumindest stark eingeschränkt wird.

Die vorliegende Erfindung erzielt jedoch durch die spezifische Einspeisung des Inertisierungsgases in die Anschlusskammer bzw. (zumindest) die Beaufschlagung der Anschlusskammer mit dem Inertisierungsgas den bereits angesprochenen weiteren Vorteil, der darin besteht, dass eine Abdichtung der Wand zwischen der Anschlusskammer und dem Reaktorbehälter nicht vollständig gasdicht ausgeführt werden muss, was aufgrund der hohen Temperaturen nur mit sehr hohem Materialaufwand, beispielsweise die Verwendung temperaturbeständiger Balgenstrukturen und dergleichen, durchzuführen wäre. Durch die vorteilhafte kontinuierliche Abströmung von Inertisierungsgas aus der Anschlusskammer in den Reaktorbehälter kann ferner eine konvektive Wärmeabfuhr erzielt und damit eine Kühlung der Anschlusskammer bzw. eine Unterstützung einer vorhandenen Kühlung erzielt werden.

Vorteilhaft ist, wie erwähnt, dass außerhalb der Anschlusskammer und des Reaktorbehälters allenfalls sehr geringe Ausgleichsbewegungen auftreten. Daher sind gemäß einer Ausgestaltung der vorliegenden Erfindung der Reaktorbehälter und die Anschlusskammer mit der optionalen Ausnahme eines oder mehrerer Sollauslässe, beispielsweise in Form eines oder mehrerer Kamine, gemeinsam gasdicht umhüllt. Unter dem Begriff "Sollauslass" soll dabei hier ein gezielt für den Gasaustritt geöffneter oder öffenbarer Auslass verstanden werden, beispielsweise eine permanent geöffnete Austrittsöffnung oder eine durch einen erhöhten Innendruck öffenbare und als Rückschlagsventil wirkende Gasaustrittsklappe. Ein "Sollauslass" unterscheidet sich von Öffnungen, die sich aufgrund unvermeidlicher Undichtigkeiten ergeben. Die gasdichte Umhüllung kann dabei unter Verwendung eines separaten Außenbehälters (Containment) bereitgestellt sein, der den Reaktorbehälter und die Anschlusskammer, die jeweils ihre eigenen Außenwände aufweisen, nochmals separat umgibt. Vorteilhaft kann aber auch sein, die Außenwände des Reaktorbehälters und der Anschlusskammer, bis auf die Wand, in der die stabförmigen Abschnitte der Stromeinspeiseelemente in den Wanddurchtritten längsbeweglich aufgenommen sind, und wiederum bis auf den oder die Sollauslässe, gasdicht auszubilden.

Wie erwähnt, kann der Reaktorbehälter einen oder mehrere Sollauslässe aufweisen, der oder die mit einem oder mehreren Kaminen verbunden sein kann oder können. Ein oder mehrere Kamine können dabei eine Dimensionierung aufweisen, die es ermöglicht, einen durch die erwähnten Effekte auftretenden Überdruck abzuleiten und durch den Kamineffekt einen leichten Unterdruck in dem Reaktorbehälter zu erzielen. Ein auf diese Weise bis zu einem gewissen Grad inertisiertes und (durch den oder die Kamine) zur Umgebung "offenes" System kann die Drucksteigerungsrate innerhalb des Reaktorbehälters im Fall eines Austritts von Kohlenwasserstoffen durch Beschädigung des oder der Reaktionsrohre auf ein tolerierbares Maß begrenzt werden. Die Verwendung von Inertisierungsgas in der erfindungsgemäßen Weise, die eine kontinuierliche Spülung mit einer vergleichsweise geringen Menge Inertisierungsgas umfasst, stellt sicher, dass es zu keiner Rückströmung von Umgebungsluft in den Reaktorbehälter und die Anschlusskammer kommt. Zudem können auf diese Weise geringe Falschlufteinträge infolge unzureichender Abdichtung kompensiert werden.

Durch das vorgeschlagene Konzept der mit Inertgas gefüllten Kammern (Reaktorbehälter und Anschlusskammer) kann der Sauerstoffgehalt in diesen Kammern reduziert werden. Wie erfindungsgemäß ausgenutzt werden kann, korreliert dabei die Umsetzungsrate der austretenden Kohlenwasserstoffe und damit die maßgebliche zusätzliche Volumenzunahmerate (in Folge des Reaktionswärmeeintrags) in erster Näherung mit dem Sauerstoffpartialdruck. Diese Korrelation ist in der nachfolgenden Tabelle 1 zusammengefasst, wobei mit $\gamma O_2$ der Sauerstoffpartialdruck und mit $V_{reak}$ die reaktionsbedingte Volumenzunahmerate bezeichnet sind.

| $\gamma O_2$ [vol.%] | $V_{reak}$ [m³/s] |
|---|---|
| 21 | 218 |
| 15 | 156 |
| 10 | 104 |
| 5 | 52 |
| 3 | 31 |
| 1 | 10 |
| 0,1 (fast inert) | 1 |

Der maximal zulässige Druck $p_{max}$ folgt aus der mechanischen Stabilität der jeweiligen Kammern bzw. eines umgebenden Containments. Dieser muss zumindest so groß sein, wie der Druck $p_{box}$ bei einem Coilreißer oder bei einem entsprechenden anderen sicherheitsrelevanten Ereignis, welcher wiederum vom Volumen $V_{Box}$ der beteiligten Kammern, dem Kamindurchmesser $D_{Kamin}$ und dem Sauerstoffpartialdruck abhängt:

$$p_{max} \geq p_{box} = f\left(V_{Box}, D_{Kamin}, \gamma O_2\right)$$

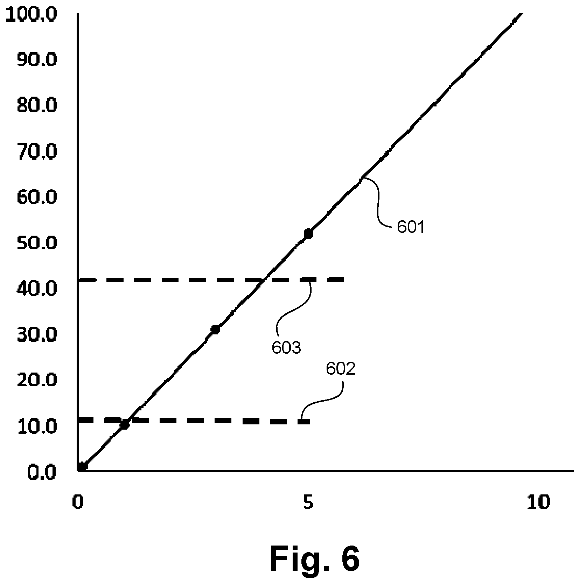

Aus dieser Forderung ergibt sich eine Designgrundlage für die Dimensionierung des Kamins, also der offenen Verbindung zur Umgebung und umgekehrt. Diese Beziehung ist in Figur 6 unten nochmals erläutert. Legt man hier beispielsweise einen maximal zulässigen Druckanstieg von 20 mbar zugrunde, wie mit den gestrichelten Linien 601 und 602 in Figur 6 veranschaulicht, darf sich, um einen Kamin mit 500 mm Durchmesser (gestrichelte Linie 601) verwenden zu können, nur eine reaktionsbedingte Volumenzunahmerate von ca. 10 m³/s ergeben, was zu einem maximalen Sauerstoffgehalt von ca. 1% führt, der durch die Inertisierung eingestellt wird. Umgekehrt muss man, wenn man eine Inertisierung auf einen Sauerstoffgehalt von maximal 1% durchführen will, also einen Kamindurchmesser von mindestens 500 mm verwenden. Um einen Kamin mit 900 mm Durchmesser (gestrichelte Linie 602) verwenden zu können, darf sich nur eine reaktionsbedingte Volumenzunahmerate von ca. 42 m3/s ergeben, was zu einem maximalen Sauerstoffgehalt von ca. 4 % führt, der durch die Inertisierung eingestellt wird. Umgekehrt und analog zu den Erläuterungen oben muss man hier, wenn man eine Inertisierung auf einen Sauerstoffgehalt von maximal 4% durchführen will, also einen Kamindurchmesser von mindestens 900 mm verwenden.

Je kleiner der Sauerstoffgehalt in den beteiligten Kammern, desto geringer ist also die Volumenzunahme. Demzufolge kann auch der Durchmesser des Notkamins kleiner sein, der das zusätzliche Volumen abführen muss. Entscheidend für eine effiziente Begrenzung des Sauerstoffgehalts ist dabei stets eine hinreichend gute Abdichtung gegenüber der Umgebung, um den Eintrag von sauerstoffhaltiger Falschluft so weit wie möglich bzw. in ausreichender Weise zu verhindern.

Mit anderen Worten wird im Rahmen der vorliegenden Erfindung also mittels des Inertisierungsgases ein Maximalsauerstoffgehalt in dem Reaktionsbehälter und/oder der Anschlusskammer eingestellt, der auf Grundlage einer Dimensionierung des oder der Kamine ausgewählt wird, bzw. sind die Gaseinspeisemittel für eine Einspeisung von Inertisierungsgas bzw. für eine Einstellung des Sauerstoffgehaltes auf dieser Grundlage eingerichtet.

Eine Menge des eingespeisten Inertisierungsgases kann durch entsprechende Regelungsmittel insbesondere auf Grundlage einer Sauerstoffmessung in dem einen oder den mehreren Kaminen geregelt werden, wodurch der Sauerstoffgehalt im Betrieb konstant gehalten werden kann. Ein entsprechendes Sicherheitskonzept kann beispielsweise auch umfassen, dass ein Betrieb des Reaktors unterbunden wird oder bleibt, wenn der gemessene Sauerstoffgehalt einen Sollsauerstoffgehalt überschreitet. Beispielsweise kann eine Einspeisung von Kohlenwasserstoffen in die Reaktionsrohre und/oder deren Beheizung erst bei Unterschreitung eines geforderten Sauerstoffgehalts freigegeben werden. Bei Detektion eines Fehlers kann allgemein der Reaktionsbetrieb mit Kohlenwasserstoffzugabe in die Reaktionsrohre unterbunden werden.

Ein unzulässiger Austritt von Gas aus den Reaktionsrohren kann beispielsweise über Druckmesssensoren detektiert werden, wobei eine Einspeisung von Kohlenwasserstoffen in die Reaktionsrohre bei Detektion eines Gasaustritts unterbunden werden kann, um die Gesamtmenge an austretenden Kohlenwasserstoffen zu minimieren.

Zur Detektion sehr kleiner Beschädigungen (Leckströmung ohne drastischen Druckanstieg) kann auch der Kohlenwasserstoffgehalt in dem oder den Kaminen (beispielsweise in Form eines Kohlenmonoxidäquivalents) kontinuierlich gemessen werden. Ein unzulässiger Wert kann ebenfalls die Unterbindung der Kohlenwasserstoffeinspeisung zur Folge haben.

Die vorliegende Erfindung kann also, allgemeiner gesprochen, umfassen, dass auf Grundlage einer Druck- und/oder Kohlenwasserstoffmessung in dem einen oder den mehreren Kaminen ein Wert bestimmt wird, der einen Gasaustritt aus dem einen oder den mehreren Reaktionsrohren kennzeichnet, und dass eine oder mehrere Sicherheitsmaßnahmen eingeleitet wird oder werden, wenn der Wert einen vorgegebenen Schwellwert überschreitet.

Gemäß einer Ausgestaltung der Erfindung können in der Anschlusskammer Kühlpaneele bereitgestellt sein, die mit einem Kühlfluid durchströmbar sind, und die zwischen zumindest zwei oder zwischen zumindest zwei Gruppen der stabförmigen Abschnitte, die in die Anschlusskammer ragen, angeordnet sind.

Die Kühlpaneele sind in dieser Ausgestaltung der Erfindung vorteilhafterweise zumindest in einem Abschnitt flach ausgebildet, d.h. sie erstrecken sich zwischen zwei in einem Abstand zueinander angeordneten Grenzflächen, wobei der Abstand der Grenzflächen eine Dicke der Kühlpaneele definiert und eine Erstreckung entlang der Grenzflächen um mehr als das Doppelte, Fünffache, Zehnfache oder Zwanzigfache größer als die Dicke ist. Die Grenzflächen können ebene oder gekrümmte Grenzflächen sein, so dass die Kühlpaneele flach und eben ausgebildet sein können, sie können aber auch gekrümmt sein, so dass die Kühlpaneele in diesem Fall flach und halb- oder teilzylinderförmig gekrümmt ausgebildet sein können. Unterschiedliche Kühlpaneele können auch unterschiedlich dimensioniert bzw. ausgebildet sein. Die "Grenzflächen" sind dabei Flächen, die die maximale Dicke der Kühlpaneele definieren. Die Kühlpaneele müssen nicht vollflächig an diesen Grenzflächen anliegen.

Diese Dimensionierungen gelten für jedes der Kühlpaneele individuell, d.h. ein erstes Kühlpaneel kann schräg oder senkrecht zu einem zweiten Kühlpaneel angeordnet sein. Mehrere Kühlpaneele können insbesondere um eine Achse, die parallel zu der Längserstreckungsrichtung der stabförmigen Abschnitte der Stromeinspeiseelemente und senkrecht zu der Wand des Reaktorbehälters ist, zueinander verdreht sein.

Die Kühlpaneele können insbesondere für eine Durchströmung mit dem Kühlfluid in einer Richtung, die insgesamt einer Richtung senkrecht oder parallel zu den stabförmigen Abschnitten entspricht, eingerichtet sein, beispielsweise durch entsprechende Einspeise- und Entnahmeöffnungen für das Kühlfluid an Seiten, die parallel zu den stabförmigen Abschnitten liegen.

Die Dicke der Kühlpaneele kann, zumindest in dem wie erwähnt dimensionierten Abschnitt, im Bereich von 0,5 cm bis 10 cm, insbesondere von 1 cm bis 5 cm, liegen.

Insbesondere kann die Anschlusskammer in dieser Ausgestaltung der vorliegenden Erfindung Seitenwände aufweisen, die sich senkrecht zu der Wand des Reaktorbehälters, durch die die stabförmigen Abschnitte der Stromeinspeiseelemente jeweils an den Wanddurchtritten verlaufen, erstrecken. Ein oder mehrere weitere Kühlpaneele, können dabei an bzw. parallel zu zumindest einer der Seitenwände angeordnet sein. Diese Kühlpaneele können mit einer grundsätzlichen Dimensionierung wie die zuvor erwähnten Kühlpaneele ausgebildet sein.

Insbesondere kann die Anschlusskammer auch eine Bodenwand aufweisen, die sich parallel zu der Wand des Reaktorbehälters, durch die die stabförmigen Abschnitte der Stromeinspeiseelemente jeweils an den Wanddurchtritten verlaufen, erstreckt, wobei zwischen der angesprochenen Wand des Reaktorbehälters und der Bodenwand der Anschlusskammer die zuvor beschriebenen Elemente angeordnet sind. Die Bodenwand kann zumindest teilweise als Hohlwand ausgebildet und zur Durchströmung mit dem erwähnten oder einem weiteren Kühlfluid eingerichtet sein.

In der vorliegenden Erfindung wird durch die beschriebene Kühlung zusätzlich zur entsprechenden Dimensionierung und Gestaltung der Stromeinspeiseelemente selbst insgesamt eine Einhaltung ausreichend niedriger Temperaturen insbesondere zur Anbindung hoch leitfähiger und/oder flexibler Kontaktelemente sichergestellt. Insbesondere in Abstimmung mit der erfindungsgemäß vorgeschlagenen Inertisierung kann die Betriebssicherheit deutlich erhöht werden, da eine Überschreitung kritischer Temperaturen sicher verhindert werden kann.

Vorteilhafterweise sind die stabförmigen Abschnitte der Stromeinspeiseelemente, wie angesprochen, jeweils längsbeweglich in ihren Wanddurchtritten durch die Wand des Reaktorbehälters geführt. Eine auf diese Weise sichergestellte Bewegungsfreiheit ist besonders vorteilhaft für das mechanische Verhalten der Reaktionsrohre, das vor allem von der thermischen Dehnung der Rohre um mehrere Dezimeter im Betrieb des Reaktors dominiert wird. Durch die Bewegungsfreiheit wird die Biegebelastung auf die Reaktionsrohre, die bei einer starren Befestigung auftreten würde, reduziert. Die Reaktionsrohre können andererseits, wie auch unten noch angesprochen, im zweiten Bereich im Falle einer Wechselstrombeheizung mit einer starren Sternbrücke am Reaktordach befestigt werden, so dass auf diese Weise eine stabile Aufhängung auch bei einer entsprechenden Längsbeweglichkeit der stabförmigen Abschnitte der Stromeinspeiseelemente gegeben ist. Die stabförmigen Abschnitte der Stromeinspeiseelemente stellen aufgrund ihrer vorteilhaften Dimensionierung mit ausreichend hohem Leitungsquerschnitt eine sichere seitliche Führung der Reaktionsrohre sicher. Durch die Anbindung in dem Kühlraum, insbesondere über flexible Kontaktelemente, weisen dagegen, wie erwähnt, die aus dem Kühlraum zur Umgebung austretenden Bauteile nurmehr sehr geringe Ausgleichsbewegungen auf. Die erfindungsgemäße Inertisierung vereinfacht diese Ausgestaltung, wie mehrfach erwähnt, da die Wanddurchtritte selbst nicht gasdicht ausgebildet sein müssen.

Die vorliegende Erfindung kann mit Reaktionsrohren und Reaktoren verwendet werden, wie sie zum Steamcracken zum Einsatz kommen, und die mehrere Umkehrbögen im Reaktorbehälter aufweisen. Die Erfindung kann aber auch in anderen Reaktortypen zum Einsatz kommen, wie sie beispielsweise, wie erwähnt, zur Dampfreformierung verwendet werden, wobei die Reaktionsrohre keine Umkehrbögen im Reaktorbehälter aufweisen. Der erfindungsgemäß vorgeschlagene Reaktor kann zur Durchführung aller endothermen chemischen Reaktionen verwendet werden.

Die Erfindung betrifft auch ein Verfahren zur Durchführung einer chemischen Reaktion unter Verwendung eines Reaktors, der einen Reaktorbehälter und ein oder mehrere Reaktionsrohre aufweist, wobei in den Reaktorbehälter zur elektrischen Beheizung des einen oder der mehreren Reaktionsrohre ein oder mehrere Stromeinspeiseelemente geführt ist oder sind.

Erfindungsgemäß wird ein Reaktor verwendet, bei dem das eine oder mehreren Stromeinspeiseelemente einen oder jeweils einen stabförmigen Abschnitt aufweist oder aufweisen und der oder die stabförmigen Abschnitte an einem oder jeweils einem Wanddurchtritt durch eine Wand des Reaktorbehälters verläuft oder verlaufen. Außerhalb des Reaktorbehälters und anschließend an die Wand des Reaktorbehälters, in welcher der oder die Wanddurchtritte ausgebildet ist oder sind, befindet sich eine Anschlusskammer, in welche der oder die stabförmigen Abschnitte hineinragt oder hineinragen. Es sind Gaseinspeisemittel bereitgestellt, die dafür eingerichtet sind, die Anschlusskammer mit einem Inertisierungsgas zu beaufschlagen, und der oder die Wanddurchtritte mit dem oder den darin längsbeweglich aufgenommenen stabförmigen Abschnitten ist oder sind gasdurchlässig ausgebildet, so dass zumindest ein Teil des in die Anschlusskammer eingespeisten Inertisierungsgases in den Reaktorbehälter strömt.

In einer besonders bevorzugten Ausgestaltung der Erfindung wird ein Reaktor verwendet, bei dem eine Anzahl von Rohrstrecken des einen oder der mehreren Reaktionsrohre jeweils zwischen einem ersten Bereich und einem zweiten Bereich in dem Reaktorbehälter verlaufen, und wobei die ersten Bereiche zur Beheizung der Rohrstrecken jeweils elektrisch mit einem oder mehreren Stromanschlüssen einer Stromquelle verbunden werden.

In dieser Ausgestaltung wird dabei ein Reaktor verwendet, der in dem ersten Bereich Stromeinspeiseanordnungen aufweist, an die jeweils eine oder jeweils eine Gruppe der Rohrstrecken elektrisch angebunden ist, und die jeweils eines der Stromeinspeiseelemente mit dem oder den stabförmigen Abschnitten aufweisen, die jeweils an den Wanddurchtritten durch eine Wand des Reaktorbehälters verlaufen. Außerhalb des Reaktorbehälters und anschließend an die Wand des Reaktorbehälters, durch die die stabförmigen Abschnitte an ihren Wanddurchtritten verlaufen, ist eine Anschlusskammer angeordnet, in die die stabförmigen Abschnitte hineinragen. Die stabförmigen Abschnitte sind in den Wanddurchtritten längsbeweglich aufgenommen. Die Wanddurchtritte mit den darin längsbeweglich aufgenommenen stabförmigen Abschnitten sind gasdurchlässig ausgebildet, und es sind ferner erfindungsgemäß Mittel bereitgestellt, die dafür eingerichtet sind, die Anschlusskammer mit einem Inertisierungsgas zu beaufschlagen, und das Inertisierungsgas zumindest zu einem Teil durch die Wanddurchtritte in den Reaktorbehälter abströmen zu lassen.

Zu weiteren Merkmalen und Vorteilen eines entsprechenden Verfahrens, bei dem vorteilhafterweise ein Reaktor gemäß einer der zuvor erläuterten Ausgestaltungen der Erfindung verwendet wird, sei auf die obigen Erläuterungen verwiesen.

Die Erfindung wird nachfolgend unter Bezugnahme auf die beigefügten Zeichnungen weiter erläutert, die Ausgestaltungen der vorliegenden Erfindung unter Bezugnahme und im Vergleich zum Stand der Technik veranschaulichen.

Figurenbeschreibung

Figur 1 veranschaulicht schematisch einen Reaktor zur Durchführung einer chemischen Reaktion gemäß einer nicht erfindungsgemäßen Ausgestaltung.

Figur 2 veranschaulicht schematisch einen Reaktor zur Durchführung einer chemischen Reaktion gemäß einer Ausgestaltung der Erfindung.

Figur 3 veranschaulicht schematisch einen Reaktor zur Durchführung einer chemischen Reaktion gemäß einer weiteren Ausgestaltung der Erfindung.

Figuren 4A und 4B zeigen Teilansichten von Reaktoren zur Durchführung einer chemischen Reaktion gemäß einer weiteren Ausgestaltung der Erfindung.

Figur 5 veranschaulicht schematisch einen Reaktor zur Durchführung einer chemischen Reaktion gemäß einer weiteren Ausgestaltung der Erfindung.

Figur 6 veranschaulicht schematisch Grundlagen einer Kamindimensionierung gemäß einer Ausgestaltung der vorliegenden Erfindung.

In den Figuren sind einander baulich oder funktionell entsprechende Elemente mit identischen Bezugszeichen veranschaulicht und werden der Übersichtlichkeit halber nicht wiederholt erläutert. Werden nachfolgend Komponenten von Vorrichtungen erläutert, betreffen die entsprechenden Erläuterungen jeweils auch die damit durchgeführten Verfahren und umgekehrt. Die Figurenbeschreibung nimmt dabei wiederholt auf eine Wechselstrombeheizung Bezug. Wie erwähnt, eignet sich die vorliegende Erfindung aber in gleicher Weise auch zur Verwendung von Gleichstrom zur Beheizung. Auf die obigen Erläuterungen wird dabei verwiesen.

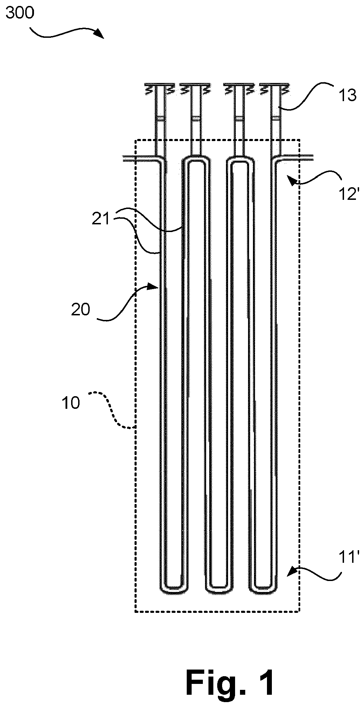

Figur 1 veranschaulicht schematisch einen Reaktor zur Durchführung einer chemischen Reaktion gemäß einer nicht erfindungsgemäßen Ausgestaltung.

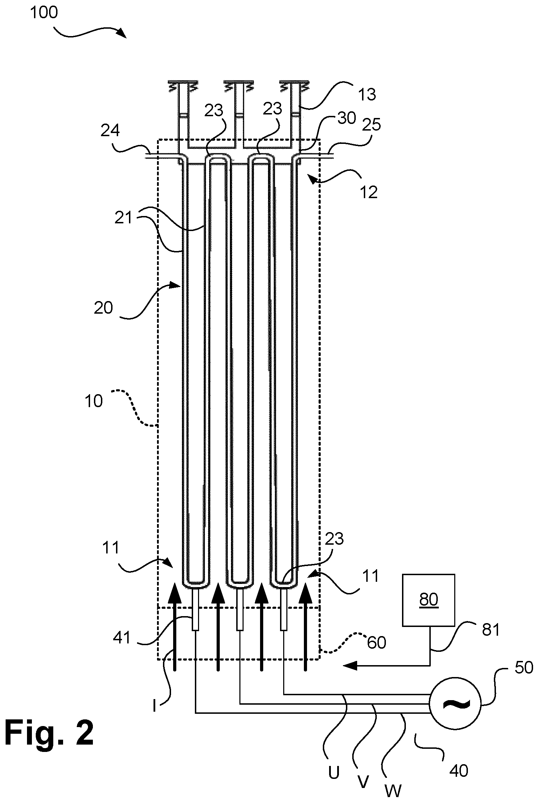

Der hier mit 300 bezeichnete Reaktor ist zur Durchführung einer chemischen Reaktion eingerichtet. Er weist dazu einen insbesondere thermisch isolierten Reaktorbehälter 10 und ein Reaktionsrohr 20 auf, wobei eine Anzahl von Rohrstrecken des Reaktionsrohrs 20, die hier nur in zwei Fällen mit 21 bezeichnet sind, jeweils zwischen einer ersten Zone 11' und einer zweiten Zone 12' in dem Reaktorbehälter 10 verlaufen. An einer Decke des Reaktorbehälters bzw. an einer Stützstruktur ist das Reaktionsrohr 20, das nachfolgend noch in Bezug auf Figur 2 näher erläutert wird, mit geeigneten Aufhängungen 13 befestigt. In einem unteren Bereich kann der Reaktorbehälter insbesondere eine nicht veranschaulichte Feuerung aufweisen. Es versteht sich, dass hier und nachfolgend jeweils mehrere Reaktionsrohre bereitgestellt sein können.

Figur 2 veranschaulicht schematisch einen Reaktor zur Durchführung einer chemischen Reaktion gemäß Ausgestaltung der vorliegenden Erfindung, der insgesamt mit 100 bezeichnet ist.

Die zuvor mit 11' und 12' bezeichneten Zonen sind hier als Bereiche 11 und 12 ausgebildet, wobei die Rohrstrecken 21 zur Beheizung der Rohrstrecken 21 in den ersten Bereichen 11 jeweils elektrisch mit den Phasenanschlüssen U, V, W) einer mehrphasigen Wechselstromquelle 50 verbindbar sind. Schalter und dergleichen sowie die spezifische Art der Anbindung sind nicht veranschaulicht.

Die Rohrstrecken 21 sind in der hier veranschaulichten Ausgestaltung der Erfindung in den zweiten Bereichen 12 mittels eines Verbindungselements 30, das einstückig mit dem einen oder den mehreren Reaktionsrohren 20 verbunden und innerhalb des Reaktorbehälters 10 angeordnet ist, elektrisch leitend miteinander verbunden. Daran kann auch ein Neutralleiter angebunden sein.

In dem hier veranschaulichten Reaktor 100 sind damit mehrere Rohrstrecken 21 eines Reaktionsrohrs 20 (wenngleich mehrere solcher Reaktionsrohre 20 bereitgestellt sein können), die nebeneinander in dem Reaktorbehälter 10 angeordnet sind. Die Rohrstrecken 21 gehen über Umkehrbögen 23 (nur teilweise bezeichnet) ineinander über und sind mit einem Einspeiseabschnitt 24 und einem Entnahmeabschnitt 25 verbunden.

Eine erste Gruppe der Umkehrbögen 23 (in der Zeichnung unten) ist nebeneinander in dem ersten Bereich 11 und eine zweite Gruppe der Umkehrbögen 23 (in der Zeichnung oben) ist nebeneinander in dem zweiten Bereich 12 angeordnet. Die Umkehrbögen 23 der zweiten Gruppe sind in dem Verbindungselement 30 ausgebildet und die Rohrstrecken 21 erstrecken sich ausgehend von dem Verbindungselement 30 in dem zweiten Bereich 12 zu dem ersten Bereich 11.

Die Verwendung des Verbindungselements 30 ist im Rahmen der vorliegenden Erfindung optional, wenngleich vorteilhaft. Ausgestaltungen der Erfindung, die nachfolgend erläutert sind, betreffen dagegen insbesondere die Ausgestaltung der Mittel zur Stromeinspeisung in dem ersten Bereich 11. Diese erfolgt durch die Verwendung von Stromeinspeiseelementen 41, die hier stark vereinfacht veranschaulicht sind und von denen nur eines bezeichnet ist.

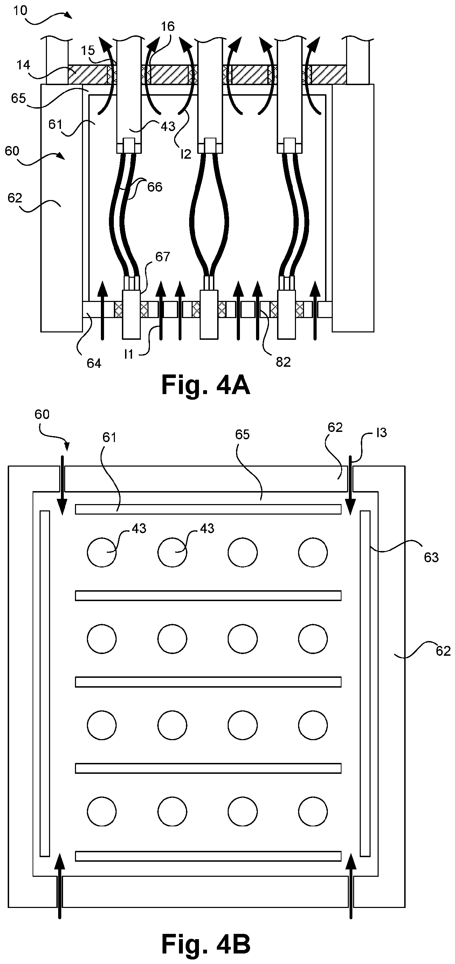

Wie insbesondere auch in Bezug auf die Figuren 4A und 4B unten erläutert, ragen die Stromeinspeiseelemente 41 in eine Anschlusskammer 60. Die Stromeinspeiseelemente 41, genauer stabförmige Abschnitte hiervon, sind in einer den Reaktorbehälter 10 und die Anschlusskammer 60 trennenden Wand längsbeweglich an entsprechenden Wanddurchtritten aufgenommen, wobei sich hier kein gasdichter Abschluss ergibt. Wie mit Pfeilen I (nur ein Pfeil ist entsprechend bezeichnet) veranschaulicht, wird ein Inertisierungsgas bereitgestellt, das in die Anschlusskammer 60 eingespeist wird und über die Wanddurchtritte, in denen die Stromeinspeiseelemente 41 längsbeweglich aufgenommen sind, in den Reaktorbehälter 10 übertritt. Zur Bereitstellung und Einspeisung des Inertisierungsgases sind geeignete Gaseinspeisemittel vorgesehen, die hier stark vereinfacht mit 80 bezeichnet sind, und die beispielsweise einen oder mehrere Gastanks sowie entsprechende Leitungen 81 umfassen.

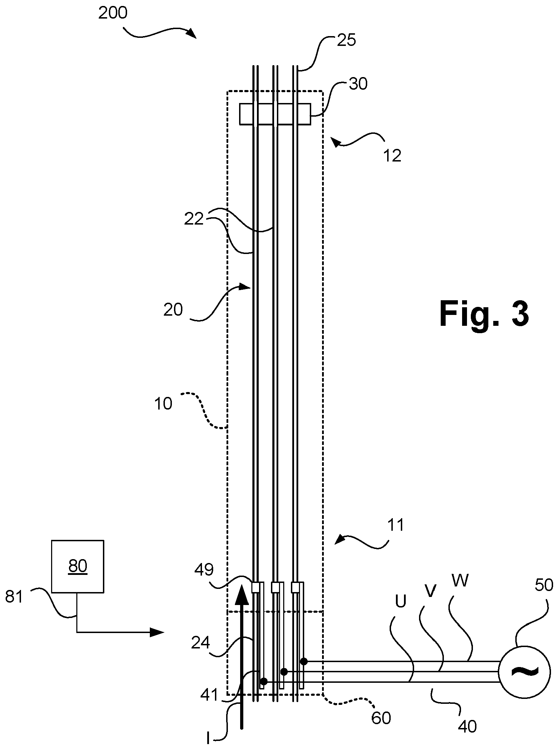

Figur 3 veranschaulicht schematisch einen Reaktor zur Durchführung einer chemischen Reaktion gemäß Ausgestaltung der vorliegenden Erfindung, der insgesamt mit 200 bezeichnet ist.

In dem Reaktor 200 umfassen die hier abweichend mit 22 bezeichneten Rohrstrecken jeweils eine Rohrstrecke 22 von mehreren Reaktionsrohren 20, wobei die Rohrstrecken fluidisch 22 unverbunden nebeneinander in dem Reaktorbehälter 10 angeordnet sind und jeweils mit Einspeiseabschnitten 24 und Entnahmeabschnitten 25 verbunden sind. Zu den übrigen Elementen sei auf die obigen Erläuterungen zu den voranstehenden Figuren ausdrücklich verwiesen.

Wiederum ist die Verwendung eines Verbindungselements 30 im Rahmen der vorliegenden Erfindung optional, wenngleich vorteilhaft. Auch hier sind Stromeinspeiseelemente 41 und die Anschlusskammer 60 stark vereinfacht veranschaulicht. Die Einspeisung des Inertisierungsgases I erfolgt hier wie im Wesentlichen zuvor erläutert. Die Stromeinspeiseelemente können einen manschettenartigen Bereich 49 aufweisen, der in dem ersten Bereich 11 um die Reaktionsrohre 20 bzw. die Rohrstrecken gelegt sind.

Figuren 4A und 4B zeigen Teilansichten von Reaktoren 100 mit Anschlusskammern 60 gemäß Ausgestaltungen der vorliegenden Erfindung im Längsschnitt (Figur 4A) und Querschnitt (Figur 4B), wobei im Querschnitt (Figur 4B) lediglich einige ausgewählte Elemente veranschaulicht sind. Die Figuren 4A und 4B sind insbesondere insoweit stark vereinfacht, als in realen Reaktoren eine deutlich größere Anzahl der hier jeweils veranschaulichten Elemente bereitgestellt sein kann.

Wie insbesondere aus Figur 4A ersichtlich, verlaufen die stabförmigen Abschnitten 43 der Stromeinspeiseelemente jeweils an den Wanddurchtritten 15 durch die Wand 14 des Reaktorbehälters 10. Die stabförmigen Abschnitte 43 sind hier jeweils, wie mehrfach erwähnt, längsbeweglich aufgenommen und es ist kein gasdichter Abschluss an den Wanddurchtritten 15 vorhanden. Außerhalb des Reaktorbehälters 10 und anschließend an die Wand 14 des Reaktorbehälters 10, durch die die stabförmigen Abschnitte 43 an ihren Wanddurchtritten 15 verlaufen, ist die Anschlusskammer 60 angeordnet, in die die stabförmigen Abschnitte 43 hineinragen. Da kein gasdichter Abschluss an den Wanddurchtritten 15 ausgebildet ist, kann Inertisierungsgas, das über geeignete Öffnungen 82 oder Düsen, wie mit Pfeilen I1 veranschaulicht, in die Anschlusskammer eingespeist wird, in den Reaktorbehälter strömen, wie mit Pfeilen I2 veranschaulicht. Wie mit Pfeilen I3 in Figur 4B veranschaulicht, kann Inertisierungsgas auch seitlich in die Anschlusskammer 60 eingespeist werden.

In der Anschlusskammer 60 können Kühlpaneele 61 bereitgestellt und wie insbesondere aus Figur 3B ersichtlich angeordnet sein. Diese können mit einem Kühlfluid durchströmbar und zwischen zumindest zwei oder zwischen zumindest zwei Gruppen der stabförmigen Abschnitte 43, die in die Anschlusskammer 60 hineinragen, angeordnet sein.

Die Anschlusskammer 60 weist Seitenwände 62 auf, die sich jeweils senkrecht zu der Wand 14 des Reaktorbehälters 10, durch die die stabförmigen Abschnitte 43 verlaufen, erstrecken, wobei, wie aus Figur 4B ersichtlich und in Figur 4A nicht gesondert dargestellt, ein oder mehrere weitere Kühlpaneele 63 auch an zumindest einer der Seitenwände 62 angeordnet sein können.

Die Anschlusskammer 60 weist eine Bodenwand 64 auf, die in Figur 4A dargestellt ist und sich parallel zu der Wand 14 des Reaktorbehälters 10, durch die die stabförmigen Abschnitte 43 verlaufen, erstreckt, wobei die Bodenwand 64 zumindest in einem Abschnitt als Hohlwand ausgebildet und ebenfalls zur Durchströmung mit einem Kühlfluid eingerichtet sein kann. Die Anschlusskammer 60 ist ohne Einrichtungen zur Bereitstellung einer erzwungenen Konvektion in einer die Kühlpaneele 61 und die stabförmigen Abschnitte 43 umgebenden Gasatmosphäre 65 ausgebildet.

In der Anschlusskammer 60 sind an die stabförmigen Abschnitte 43 in Figur 3A als Litzen 66 veranschaulichte flexible Verbindungselemente angebunden, die mit einem nicht an die stabförmigen Abschnitte 43 angebundenen Ende an unbeweglich in der Anschlusskammer 60 angeordneten starren Kontaktelementen 67, die hier in isolierenden und gasdichten Aufnahmen im Boden 64 (ohne nähere Bezeichnung), befestigt sind.

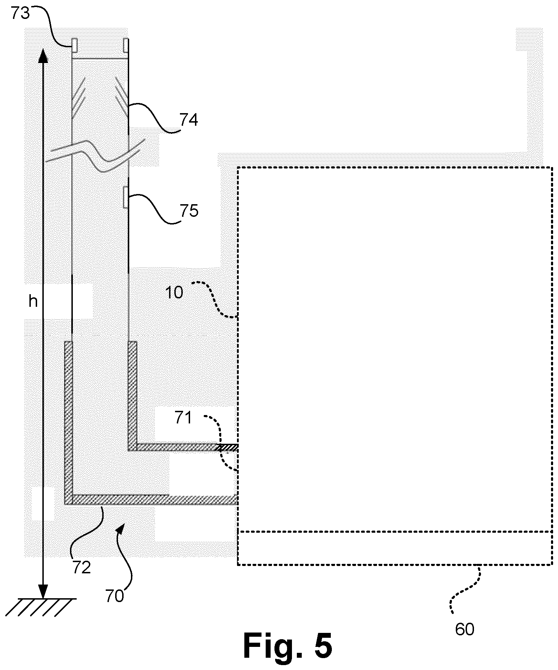

Figur 5 veranschaulicht schematisch einen Reaktor zur Durchführung einer chemischen Reaktion gemäß einer weiteren Ausgestaltung der Erfindung in Erweiterung zur Darstellung gemäß den vorigen Figuren, wobei die in Figur 2 bereits erläuterten Elemente nicht erneut veranschaulicht sind. Diese Elemente können alle Teil des in Figur 5 veranschaulichten Reaktors sein. In Figur 5 sind insbesondere der Reaktorbehälter 10 und die Anschlusskammer 60 stark vereinfacht gezeigt.

Wie hier veranschaulicht, ist der Reaktorbehälter 10 über einen Sollauslass 71 an einen Kamin 70 angebunden, der in einem an den Reaktorbehälter 10 anschließenden Bereich eine geeignete Isolierung 72 aufweist. Der Kamin 70 kann eine Höhe h gegenüber Grund von beispielsweise 20 bis 50 Metern aufweisen, um im Havariefall austretende Kohlenwasserstoffe an eine sichere Stelle abführen zu können. Ein sogenanntes Velocity Seal 74 kann ebenfalls bereitgestellt sein, ebenso wie ein oder mehrere Sensoren zur Erfassung eines Sauerstoff- und/oder Kohlenwasserstoffgehalt im Kamingas. Optional können im Bereich des Kaminaustritts zusätzlich Zündvorrichtungen oder Pilotbrenner 73 installiert werden, um im Havariefall den Austritt unverbrannter Kohlenwasserstoffe in die Atmosphäre zumindest teilweise zu unterbinden.

Figur 6 veranschaulicht schematisch Grundlagen einer Kamindimensionierung gemäß einer Ausgestaltung der vorliegenden Erfindung in Form eines Diagramms, in dem ein Sauerstoffgehalt in Prozent auf der Abszisse und eine reaktionsbedingte Volumenzunahmerate in m$^3$/s auf der Ordinate dargestellt sind. Ein Graph 601 stellt den bereits oben unter Bezugnahme auf die Tabelle erläuterten Zusammenhang dar. Eine gestrichelte Linie 602 bezeichnet für eine maximale Druckzunahme von 20 mbar erforderliche Werte bei einem Kamindurchmesser von 500 mm, eine gestrichelte Linie 603 bezeichnet entsprechende Werte bei einem Kamindurchmesser von 900 mm.

**Patentansprüche**

1. Reaktor (100, 200) zur Durchführung einer chemischen Reaktion, der einen Reaktorbehälter (10) und ein oder mehrere Reaktionsrohre (20) aufweist, wobei in den Reaktorbehälter (10) zur elektrischen Beheizung des einen oder der mehreren Reaktionsrohre (20) ein oder mehrere Stromeinspeiseelemente (41) geführt ist oder sind, **dadurch gekennzeichnet, dass**

   - das eine oder die mehreren Stromeinspeiseelemente (41) einen oder jeweils einen stabförmigen Abschnitt (43) aufweist oder aufweisen und der oder die stabförmigen Abschnitte (43) an einem oder jeweils einem Wanddurchtritt (15) durch eine Wand (14) des Reaktorbehälters (10) verläuft oder verlaufen,
   - sich außerhalb des Reaktorbehälters (10) und anschließend an die Wand (14) des Reaktorbehälters (10), in welcher der oder die Wanddurchtritte (15) ausgebildet ist oder sind, eine Anschlusskammer (60) befindet, in welche der oder die stabförmigen Abschnitte (43) hineinragt oder hineinragen,
   - Gaseinspeisemittel (80-82) bereitgestellt sind, die dafür eingerichtet sind, die Anschlusskammer (60) mit einem Inertisierungsgas zu beaufschlagen, und
   - der oder die Wanddurchtritte (15) mit dem oder den darin längsbeweglich aufgenommenen stabförmigen Abschnitten (43) gasdurchlässig ausgebildet ist oder sind, so dass zumindest ein Teil des in die Anschlusskammer (60) eingespeisten Inertisierungsgases in den Reaktorbehälter (10) strömt.

2. Reaktor (100, 200) nach Anspruch 1, bei dem Rohrstrecken (21, 22) des einen oder der mehreren Reaktionsrohre (20) jeweils zwischen einem ersten Bereich (11) und einem zweiten Bereich (12) in dem Reaktorbehälter (10) verlaufen und die Rohrstrecken (21, 22) in dem ersten Bereich (11) zur elektrischen Beheizung der Rohrstrecken (21, 22) jeweils elektrisch mit Stromanschlüssen (U, V, W) einer Stromquelle (50) verbunden oder verbindbar sind, wobei in dem ersten Bereich (11) Stromeinspeiseanordnungen (40) bereitgestellt sind, an die jeweils eine oder jeweils eine Gruppe der Rohrstrecken (21, 22) elektrisch angebunden ist, wobei die Stromeinspeiseanordnungen (40) jeweils eines der Stromeinspeiseelemente (41) mit den stabförmigen Abschnitten (43) aufweisen, die jeweils an Wanddurchtritten (15) durch eine Wand (14) des Reaktorbehälters (10) verlaufen.

3. Reaktor (100, 200) nach Anspruch 1 oder 2, bei dem die Gaseinspeisemittel (80-82) dafür eingerichtet sind, als das Inertisierungsgas ein Gas oder ein Gasgemisch bereitzustellen, das Stickstoff, Kohlendioxid und/oder Argon in einem jeweils überatmosphärischen Gehalt aufweist.

4. Reaktor (100, 200) nach einem der vorstehenden Ansprüche, bei dem der Reaktorbehälter (10) und die Anschlusskammer (60) mit Ausnahme eines oder mehrerer Sollauslässe (71) gemeinsam gasdicht umhüllt sind.

5. Reaktor (100, 200) nach Anspruch 4, bei dem der eine oder die mehreren Sollauslässe (71) mit einem oder mehreren Kaminen (70) verbunden ist oder sind.

6. Reaktor (100, 200) nach Anspruch 5, bei dem die Gaseinspeisemittel (80-82) dafür eingerichtet sind, einen Maximalsauerstoffgehalt in dem Reaktionsbehälter (10) und/oder der Anschlusskammer (60) auf Grundlage einer Dimensionierung des oder der Kamine (70) einzustellen.

7. Reaktor (100, 200) nach Anspruch 6, bei dem die Gaseinspeisemittel (80-82) dafür eingerichtet sind, eine Menge des Inertisierungsgases auf Grundlage einer Sauerstoffmessung in dem einen oder den mehreren Kaminen (70) zu regeln.

8. Reaktor (100, 200) nach Anspruch 7, der Mittel aufweist, die dafür eingerichtet sind, einen Reaktionsbetrieb mit Kohlenwasserstoffzugabe in die Reaktionsrohre zu unterbinden, wenn der gemessene Sauerstoffgehalt einen Sollsauerstoffgehalt überschreitet.

9. Reaktor (100, 200) nach einem der Ansprüche 5 bis 8, der Mittel aufweist, die dafür eingerichtet sind, einen Reaktionsbetrieb mit Kohlenwasserstoffzugabe in die Reaktionsrohre zu unterbinden, wenn ein Druck in dem Reaktorbehälter (10) und/oder ein Kohlenwasserstoffgehalt in dem Kamin (70) einen vorgegebenen Wert übersteigt.

10. Reaktor (100, 200) nach einem der vorstehenden Ansprüche, bei dem in der Anschlusskammer (60) Kühlpaneele (61) bereitgestellt sein, die mit einem Kühlfluid durchströmbar sind, und die zwischen zumindest zwei oder zwischen zumindest zwei Gruppen der stabförmigen Abschnitte (43), die in die Anschlusskammer (60) ragen, angeordnet sind.

11. Verfahren zur Durchführung einer chemischen Reaktion unter Verwendung eines Reaktors (100, 200), der einen Reaktorbehälter (10) und ein oder mehrere Reaktionsrohre (20) aufweist, wobei in den Reaktorbehälter (10) zur elektrischen Beheizung des einen oder der mehreren Reaktionsrohre (20) ein oder mehrere Stromeinspeiseelemente (41) geführt ist oder sind, **dadurch gekennzeichnet, dass** ein Reaktor (100, 200) verwendet wird, bei dem

- das eine oder die mehreren Stromeinspeiseelemente (41) einen oder jeweils einen stabförmigen Abschnitt (43) aufweist oder aufweisen und der oder die stabförmigen Abschnitte (43) an einem oder jeweils einem Wanddurchtritt (15) durch eine Wand (14) des Reaktorbehälters (10) verläuft oder verlaufen,
- sich außerhalb des Reaktorbehälters (10) und anschließend an die Wand (14) des Reaktorbehälters (10), in welcher der oder die Wanddurchtritte (15) ausgebildet ist oder sind, eine Anschlusskammer (60) befindet, in welche der oder die stabförmigen Abschnitte (43) hineinragt oder hineinragen,
- Gaseinspeisemittel (80-82) bereitgestellt sind, die dafür eingerichtet sind, die Anschlusskammer (60) mit einem Inertisierungsgas zu beaufschlagen, und
- der oder die Wanddurchtritte (15) mit dem oder den darin längsbeweglich aufgenommenen stabförmigen Abschnitten (43) gasdurchlässig ausgebildet ist oder sind, so dass zumindest ein Teil des in die Anschlusskammer (60) eingespeisten Inertisierungsgases in den Reaktorbehälter (10) strömt.

12. Verfahren nach Anspruch 11, bei dem ein Reaktor verwendet wird, bei dem Rohrstrecken (21, 22) des einen oder der mehreren Reaktionsrohre (20) jeweils zwischen einem ersten Bereich (11) und einem zweiten Bereich (12) in dem Reaktorbehälter (10) verlaufen, und wobei die Rohrstrecken (21, 22) in dem ersten Bereich (11) zur Beheizung der Rohrstrecken (21, 22) jeweils elektrisch mit Stromanschlüssen (U, V, W) einer Stromquelle (50) verbunden werden, wobei in dem ersten Bereich (11) Stromeinspeiseanordnungen (40) bereitgestellt sind, an die jeweils eine oder jeweils eine Gruppe der Rohrstrecken (21, 22) elektrisch angebunden ist, und die jeweils eines der Stromeinspeiseelemente (41) mit stabförmigen Abschnitten (43) aufweisen, die jeweils an Wanddurchtritten (15) durch eine Wand (14) des Reaktorbehälters (10) verlaufen.

**Fig. 1**

**Fig. 2**

**Fig. 3**

## Fig. 4A

## Fig. 4B

**Fig. 5**

Fig. 6

**Europäisches Patentamt**
**European Patent Office**
**Office européen des brevets**

# EUROPÄISCHER RECHERCHENBERICHT

**Nummer der Anmeldung**

EP 20 17 1182

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2004/091773 A1 (DEGUSSA [DE]; GAIL ERNST [DE] ET AL.) 28. Oktober 2004 (2004-10-28) | 1,11 | INV. B01J8/00 B01J8/06 |
| A | * Seite 8, Zeile 19 - Seite 14, Zeile 10; Abbildung 1 * ----- | 2-10,12 | B01J19/08 |
| A,D | DE 10 2015 004121 A1 (LINDE AG [DE]) 6. Oktober 2016 (2016-10-06) * das ganze Dokument * ----- | 1-12 | |

**RECHERCHIERTE SACHGEBIETE (IPC)**

B01J

Der vorliegende Recherchenbericht wurde für alle Patentansprüche erstellt

| Recherchenort | Abschlußdatum der Recherche | Prüfer |
|---|---|---|
| München | 22. September 2020 | Borello, Ettore |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 17 1182

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-09-2020

| Im Recherchenbericht angeführtes Patentdokument | Datum der Veröffentlichung | Mitglied(er) der Patentfamilie | Datum der Veröffentlichung |
|---|---|---|---|
| WO 2004091773 A1 | 28-10-2004 | AU 2004229151 A1<br>CN 1774291 A<br>DE 10317197 A1<br>WO 2004091773 A1<br>ZA 200508311 B | 28-10-2004<br>17-05-2006<br>04-11-2004<br>28-10-2004<br>28-03-2007 |
| DE 102015004121 A1 | 06-10-2016 | CA 2921466 A1<br>DE 102015004121 A1<br>EP 3075704 A1<br>RU 2016111730 A<br>US 2016288074 A1 | 30-09-2016<br>06-10-2016<br>05-10-2016<br>05-10-2017<br>06-10-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015004121 A1
- EP 3075704 A1
- WO 2015197181 A1
- WO 2020002326 A1
- WO 2019228798 A1
- WO 2017072057 A1

**In der Beschreibung aufgeführte Nicht-Patentliteratur**

- Ullmann's Encyclopedia of Industrial Chemistry. 15. April 2009